# EUROPÄISCHE PATENTSCHRIFT

(11) **EP 0 963 050 B1**
(45) Veröffentlichungstag und Bekanntmachung des Hinweises auf die Patenterteilung: **18.08.2004**
(21) Anmeldenummer: 99108177.9
(22) Anmeldetag: 26.04.1999
(51) Int. Cl.: H04B 1/08, B60R 11/06, B60R 11/02

(54) **Rundfunkempfänger mit herausnehmbarem Bedienteil**
Broadcast receiver with removable front panel
Récepteur de radiodiffusion avec façade détachable

(30) Priorität: 05.06.1998 DE 19825091
(43) Veröffentlichungstag der Anmeldung: 08.12.1999
(73) Patentinhaber: BECKER GmbH, D-76307 Karlsbad (DE)
(72) Erfinder: Mayer, Werner, 76307 Karlsbad (DE)
(74) Vertreter: Patentanwälte Westphal, Mussgnug & Partner

(56) Entgegenhaltungen:
- EP-A- 0 338 405
- WO-A-97/19833
- US-A- 5 097 392

## Beschreibung

Die Erfindung betrifft einen Rundfunkempfänger, insbesondere für automotive Anwendungen, gemäß dem Oberbegriff des Patentanspruches 1. Eine Vorrichtung zum Anzeigen von Informationen für ein Kraftfahrzeugen mit den Merkmalen des Oberbegriffs ist aus der EP-A-0 338 405 bekannt.

Es sind Rundfunkempfänger für automotive Anwendungen bekannt, die ein abnehmbares Bedienteil aufweisen, welches in eine Ausnehmung im Hauptteil einbringbar ist. Das abnehmbare Bedienteil ist im eingebrachten Zustand in dem Hauptteil eingerastet und kann durch Betätigung einer entsprechenden Taste entriegelt werden, wodurch das abnehmbare Bedienteil aus der Ausnehmung im Hauptteil entnommen werden kann und als Diebstahlschutz getrennt von dem Hauptteil aufbewahrt werden kann.

Es sind Rundfunkempfänger für automotive Anwendungen bekannt, die eine abklappbare Gerätefront aufweisen. Im nicht abgeklappten Zustand wird der Rundfunkempfänger durch die Tasten auf der Vorderseite der abklappbaren Gerätefront bedient bzw. wird das auf der Vorderseite der Front angebrachte Display dem Benutzer zur Aufnahme der dargestellten optischen Informationen zur Verfügung gestellt. Wird die Front abgeklappt, so werden auf der Rückseite der abgeklappten Front bzw. auf der durch den Abklappvorgang nun zugänglichen Seite des Hauptteils weitere Eingabe- oder Ausgabemöglichkeiten eröffnet, wie auch das Einbringen oder Entnehmen von Ton- oder Bildträgern in entsprechende Öffnungen im Hauptteil ermöglicht sein kann. Diese Schaffung von zusätzlichen Ein- oder Ausgabemöglichkeiten erweist sich im Hinblick auf die begrenzte, genormte Größe eines Autoradios bei dem stetig wachsenden Funktionsumfang derartiger Geräte als sehr vorteilhaft. Diese Vorteile werden durch sehr aufwendige Abklappkonstruktionen erreicht. Dies zumal durch die in einem Fahrzeug zur Verfügung stehenden begrenzten räumlichen Gegebenheiten die Möglichkeiten für eine sichere Konstruktion der Abklappmechanik deutlich eingeschränkt ist.

Aufgabe der Erfindung ist es, einen Rundfunkempfänger zu schaffen, der eine möglichst einfache und sichere Abklappmechanik zeigt und dabei dem Benutzer eine möglichst umfangreiche Funktionalität zur Verfügung stellt.

Diese Aufgabe wird erfindungsgemäß durch einen Rundfunkempfänger mit den Merkmalen des Anspruchs 1 gelöst.

Vorteilhafte Weiterbildungen ergeben sich aus den Unteransprüchen.

Erfindungsgemäß weist der Rundfunkempfänger ein Hauptteil und ein Bedienteil auf, welches in eine Ausnehmung im Hauptteil einbringbar ist und in dieser Ausnehmung um eine Drehachse abklappbar gelagert ist. Darüber hinaus ist das Hauptteil und das Bedienteil so ausgebildet, daß das Bedienteil aus der Ausnehmung im Hauptteil abnehmbar und dadurch von diesem trennbar ist. Dies wird durch eine besonders ausgebildete Art der drehbaren Lagerung erreicht, die durch einen Bolzen am Bedienteil bzw. am Hauptteil und eine diesem zugeordnete Aufnahme in dem entsprechenden anderen Teil dem Hauptteil respektive dem Bedienteil gebildet wird. Diese Drehlagerung aus Bolzen und zugeordneter Aufnahme ist so ausgebildet, daß sie gegen eine Federkraft voneinander trennbar ist und dadurch das abklappbare Bedienteil nicht nur abklappbar sondern zugleich auch von dem Hauptteil des Rundfunkempfängers trennbar ist. Durch die funktionelle Zusammenführung der Drehlagerung für den Abklappmechanismus und der Trennung ist auf diese sehr einfache und sichere Weise eine trennbare Drehlagerung für den Abklappmechanismus des Bedienteils des Rundfunkempfängers in seinem Hauptteil gegeben. Damit gelingt es durch die besondere Art der Drehlagerung nicht nur einen einfachen, raumsparenden und sicheren Abklapp- und Trennmechanismus darzustellen sondern auch die ganzen Funktionalitäten der eines abklappbaren und abnehmbaren Bedienteils zusammen zu gewährleisten.

Um diese vorteilhafte, erfindungsgemäße Wirkung zur erreichen, steht es dem Fachmann im Rahmen seines fachmännischen Könnens frei, die Aufnahme am Hauptteil oder am Bedienteil und dementsprechend den zugeordneten Bolzen am Bedienteil oder am Hauptteil anzuordnen, sowie entweder die Aufnahme oder den Bolzen oder beide so federnd auszubilden, daß die aus ihnen gebildete drehbare Lagerung gegen die Federkraft trennbar ausgebildet ist. Weiterhin ist es dem Fachmann überlassen sicherzustellen, durch welchen gängigen Mechanismus das Bedienteil entriegelt und anschließend abgeklappt wird. Beispiele für gängige Mechanismen für den Antrieb sind der Antrieb durch die eigene Gewichtskraft des Bedienteils, der Antrieb durch motorische Kraft oder elektromotorische Kraft oder ähnliches.

Als besonders vorteilhaft hat sich erwiesen, die Aufnahme kegelstumpfförmig auszubilden, wobei in der Deckfläche des Kegelstumpfs eine Vertiefung ausgebildet ist. Diese Vertiefung korrespondiert in ihrer Gestalt und Ausbildung des Bolzen derart, daß sie den Bolzen aufnehmen kann und dieser in der Vertiefung drehbar gelagert ist. Durch die schräg verlaufenden Seitenflächen des Kegelstumpfes ist auf besonders einfache Weise sichergestellt, daß das Bedienteil in die Ausnehmung im Hauptteil eingebracht werden kann, indem gegen die Federkraft der Bolzen gegen die Aufnahme langsam ansteigend gespannt wird. Dies erfolgt, indem der Bolzen auf der Schrägfläche entlang gleitet und dabei die Feder kontinuierlich weiter gespannt wird, bis der Bolzen schließlich in die Vertiefung der kegelstumpfförmigen Aufnahme einrastet. Dadurch ist die Handhabung des abnehmbaren Bedienteils insbesondere im Hinblick auf die Einbringung des abgenommenen Bedienteils in die Ausnehmung im Hauptteil für den Benutzer sehr einfach. Dies verbessert die Akzeptanz des Rundfunkempfängers beim Benutzer.

Auf entsprechende Weise hat es sich als besonders vorteilhaft herausgestellt, die Außenwand der Vertiefung mit einer schräg verlaufenden Auflauffläche entsprechend der schräg verlaufenden Seitenfläche des Kegelstumpfes zu versehen. Dies gewährleistet auf entsprechende Weise ein einfaches und sicheres Entnehmen des Bedienteils aus der Ausnehmung des Hauptteils und damit ein Trennen des Bolzens und der kegelstumpfförmigen Aufnahme, indem der Bolzen aus der Vertiefung in der Deckfläche des Kegelstumpfes über die schrägen Auflaufflächen gleitend herausbewegt wird. Dabei werden die schräg verlaufenden Auflaufflächen so ausgebildet, daß das Entnehmen des Bedienteils merklich schwieriger ist als das Einbringen in die Ausnehmung. Damit ist die sichere Fixierung in der Lagerung gegen ungewolltes Herausfallen in besonderem Maße gewährleistet. Dies wird auf dem Fachmann geläufige Art durch steilere Auflaufflächen, Einbringen von einzelnen Stufen oder ähnliches erreicht. Durch die Auflaufflächen an der Außenseite der Vertiefung als auch durch die schräg verlaufenden Seitenflächen des Kegelstumpfes ist gewährleistet, daß das abnehmbare Bedienteil aufgrund der Federkraft beim Einbringen des Bedienteils federnd in die Vertiefung einrastet und zum anderen beim Entnehmen nach der Überwindung einer Grenzposition - das entspricht der maximale Höhe der Aufnahme auf den Gleitweg des Bolzens - federnd aus der Lagerposition herausgleitet, was eine sehr angenehme Handhabung durch den Benutzer gewährleistet. Diese angenehme Benutzung wird durch die vorteilhafte Weiterbildung erreicht ohne wesentliche Abstriche in der Sicherheit der Lagerung einzugehen.

Als besonders vorteilhaft erweist sich bei dem erfindungsgemäßen Rundfunkempfänger, den Bolzen federnd zu lagern und diesen federnden Bolzen bevorzugt in einer starren Aufnahme zur Bildung einer drehbaren Lagerung einbringbar anzuordnen. Diese Ausbildung mit dem federnden Bolzen erweist sich als konstruktiv einfachste Lösung aus den verschiedenen Möglichkeiten, da der Bolzen einen geometrisch einfachen Gegenstand darstellt und dadurch auch einfach federnd verschieblich ausgebildet werden kann, wohingegen eine federnde Lagerung der Aufnahme mit ihrer konstruktiv komplizierter ausgebildeten Oberfläche zwar möglich, aber konstruktiv aufwendiger ist. Durch die einfache Konstruktion der federnden Ausbildung des Bolzens gelingt es auch, die Lagerung sehr raumsparend auszubilden, was den Gegebenheiten im Automobilbau im besonderen Maße zuträglich ist.

Ein erfindungsgemäßer Rundfunkempfänger zeigt eine oder mehrere Aufnahmen, die mit Führungselementen versehen sind. Diese Führungselemente gewährleisten das sichere Einbringen des Bolzens in die Drehlagerposition beim Einbringen des Bedienteils in das Hauptteil. Dies erfolgt, indem die Führungselemente den Bolzen in die Drehlagerposition leiten. Dies kann durch verschiedene dem Fachmann geläufige konstruktive Maßnahmen erfolgen, beispielsweise das Anbringen von Erhebungen, an welchen der Bolzen entlang gleitet, sobald das Bedienteil in die Ausnehmung des Hauptteils eingebracht wird. Durch diese Führungselemente gelingt es, auch bei wenig exakter Positionierung beim Einbringen des Bedienteils in die Ausnehmung eine anschließende sichere Fixierung des Bedienteils im Hauptteil mit dem Bolzen in der Drehposition in der Aufnahme zu gewährleisten. Diese Leitfunktion der Führungselemente greift neben dem Einbringen auch beim Entnehmen des Bedienteils aus der Ausnehmung. Dadurch ist die Handhabung des Rundfunkempfängers gerade bei schlechten oder ungünstigen Bedingungen beispielsweise bei Dunkelheit oder während des Fahrens des Automobils auf sichere Weise gegeben.

Vorzugsweise wird der Rundfunkempfänger mit einem Bedienteil ausgebildet, das eine längliche Grundgestalt aufweist. Dies kann beispielsweise in der Grundform eines Quaders realisiert sein. Dabei ist das Bedienteil an jedem Längsende mit je einem Bolzen versehen, welche zueinander fluchtend angeordnet sind und welche jeweils in zugeordnete Aufnahmen in der Ausnehmung des Hauptteils federnd eingreifbar ausgebildet sind. Durch diese Gestalt des Bedienteils ist die sichere drehbare Lagerung und damit das Abklappen des Bedienteils erreicht, da das Bedienteil nur ein recht geringes auskragendes Maß im abgeklappten Zustand aufweist. Dadurch sind geringe Drehmomente gewährleistet, was die Konstruktion in der erfindungsgemäß einfachen Weise möglich macht, was sich im Hinblick auf das begrenzte Raumangebot bei einer automobilen Anwendung aufgrund ihrer platzsparenden Konstruktionsart als besonderes .vorteilhaft erweist.

Ein bevorzugtes Ausführungsbeispiel der Erfindung ist in den Figuren dargestellt und wird im folgenden näher beschrieben.
Fig. 1 zeigt den erfindungsgemäßen Rundfunkempfänger in einer perspektivischen Ansicht von schräg vorne.
Fig. 2 zeigt den Aufbau der Lagerung in einem Längsschnitt.
Fig. 3 zeigt in einer Aufsicht eine Aufnahme.

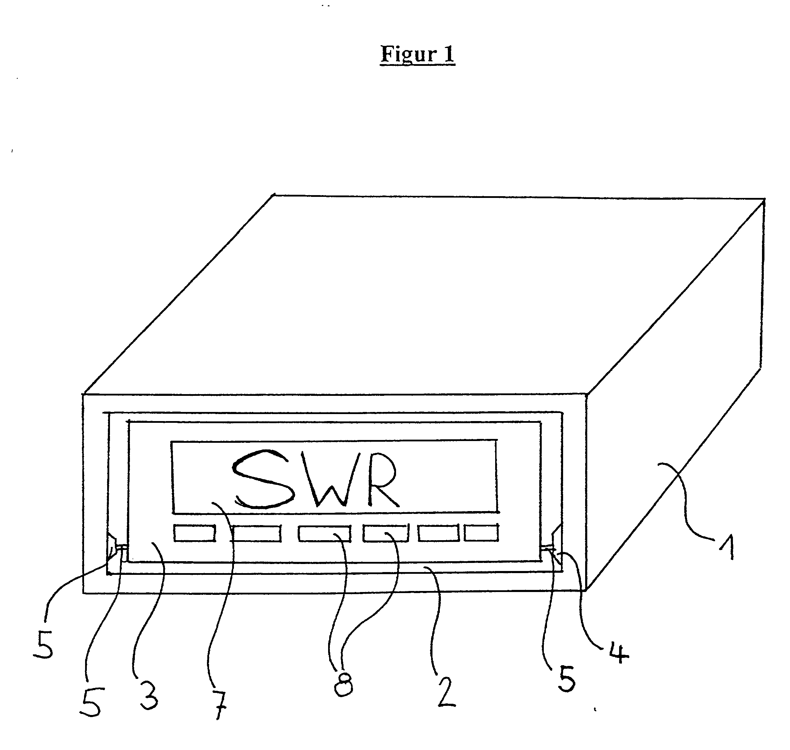

Der in Fig. 1 dargestellte Rundfunkempfänger zeigt ein Hauptteil 1 mit einer Ausnehmung 2, in welche das Bedienteil 3 eingebracht ist. Das Bedienteil 3 zeigt ein großflächiges Display 7 und diesem Display 7 zugeordnete Tasten 8. Das Bedienteil 3 ist in der Ausnehmung 2 mittels einer drehbaren und trennbaren Lagerung aus Bolzen 5 und Aufnahmen 4 gelagert. Mittels dieser Lagerung ist das Abklappen des Bedienteils 3 ermöglicht, indem die Bolzen 5 in der ihnen zugeordneten Aufnahme 4 drehbar gelagert sind. Darüber hinaus kann diese Lagerung gegen eine Federkraft voneinander getrennt werden und dadurch das Bedienteil 3 aus der Ausnehmung 2 entnommen werden. Dadurch ist ein Diebstahlschutz des Hauptgerätes 1 gegeben. Dabei ist das Bedienteil 3 länglich ausgebildet. Am jeweiligen Längsende befinden sich fluchtend zueinander die Bolzen 5 für die jeweilige drehbare Lagerung in den Aufnahmen 4.

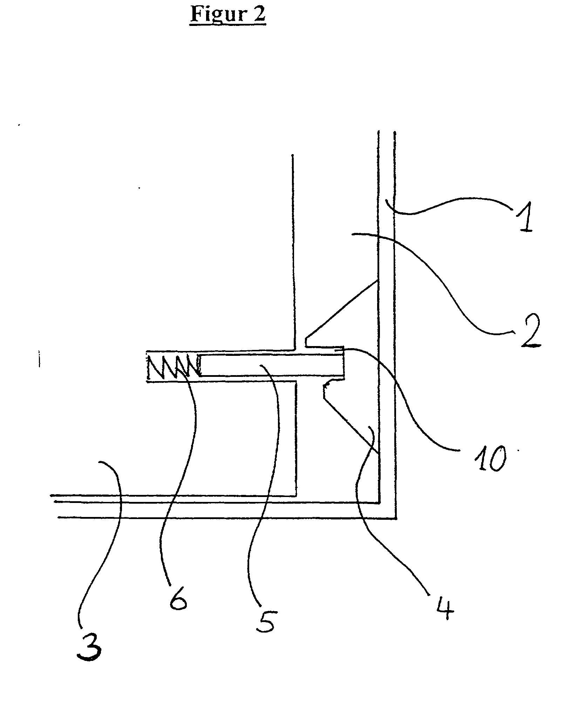

Fig. 2 zeigt, wie der Bolzen 5 in einer Ausnehmung im Bedienteil 3 längsverschieblich gelagert ist und wie er in der Ausnehmung durch die Feder 6 federnd gehalten ist. Durch die Feder 6 erfährt der Bolzen 5 eine Kraft, die ihn aus dem Bedienteil 3 herauszudrücken versucht. Der Bolzen 5 greift in die Vertiefung 10 der Aufnahme 4 ein, welche die Grundgestalt eines Kegelstumpfes mit einer Vertiefung 10 in dessen Deckfläche aufweist. Weiterhin zeigt die Vertiefung 10 schräge Auflaufflächen in ihrem Endbereich. In der Fig. 2 sind die in der Schnittdarstellung dargestellten beiden Seiten des Kegelstumpfes um die Vertiefung 10 verschieden hoch. Die unterschiedliche Höhe ist Ausdruck der Führungselemente 9, welche aufgrund einer größeren Höhe eine Leitfunktion für den Bolzen 5 beim Einführen in die Aufnahme 4 insbesondere in die Vertiefung 10 der Aufnahme 4 bewirken. Entsprechendes gilt für den Entnahmevorgang

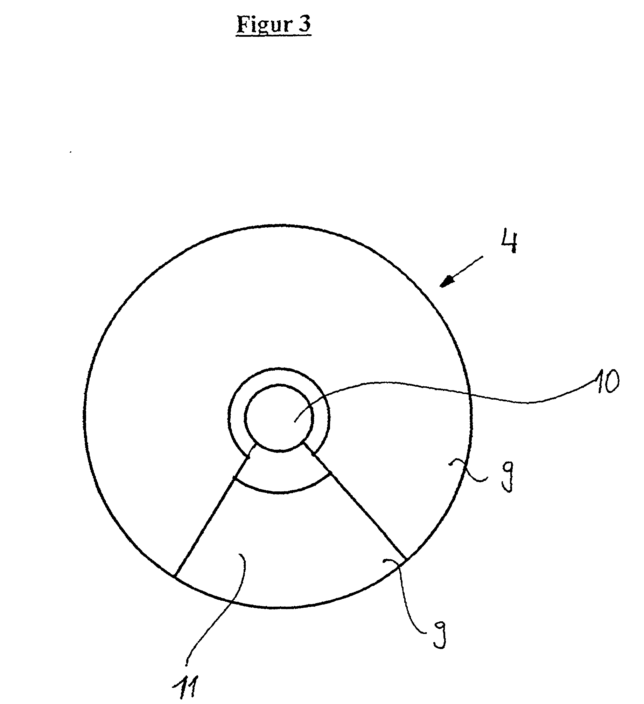

Die in Fig. 3 dargestellte Aufnahme 4 zeigt im Zentrum die Vertiefung 10, welche durch die schrägen Seitenflächen der kegelstumpfförmigen Aufnahme 4 umgeben sind. Die Seitenflächen 9 zeigen einen Sektor 11, in dem von der Aufnahme 4 eine gewisse Materialstärke abgetragen wurde. Hierdurch werden im Zusammenwirken mit dem verbliebenen unbearbeiteten Bereich der Seitenfläche Führungselemente 9 gebildet, die den Bolzen 5 beim Einbringen in die Aufnahme 4 im Sektor 11 sicher leiten, bis der Bolzen 5 die Vertiefung 10 erreicht hat und in dieser federnd, drehbar gelagert einrastet.

### Bezugszeichenliste:

- 1.: Hauptteil
- 2.: Ausnehmung
- 3.: Bedienteil
- 4.: Aufnahme
- 5.: Bolzen
- 6.: Feder
- 7.: Display
- 8.: Taste
- 9.: Führungselement
- 10.: Vertiefung
- 11.: Sektor der Aufnahme

## Patentansprüche

1. Rundfunkempfänger mit einem Hauptteil (1) und einem Bedienteil (3), das in eine Ausnehmung (2) im Hauptteil (1) einbringbar ist, das in dem Hauptteil (1) um eine Drehachse abklappbar gelagert ist, wobei die drehbare Lagerung durch einen die Drehachse festlegenden Bolzen (5) und eine diesem zugeordnete Aufnahme (4) im Hauptteil (1) bzw. im Bedienteil (3) gebildet wird und die Aufnahme (4) und der Bolzen (5) sich wechselseitig mit einer Federkraft beaufschlagen und die Aufnahme (4) und der Bolzen (5) gegen die Federkraft trennbar ausgebildet sind, **dadurch gekennzeichnet dass** die Aufnahme (4) Führungselemente (9) aufweist, welche den Bolzen (5) beim Einbringen des Bedienteils (3) in das Hauptteil (1) in die Drehlagerposition,leiten.

2. Rundfunkempfänger nach Anspruch 1, **dadurch gekennzeichnet, dass** die Aufnahme (4) kegelstumpfförmig mit einer Vertiefung (10) zur Aufnahme des Bolzens (5) in der Deckfläche des Kegelstumpfs ausgebildet ist.

3. Rundfunkempfänger nach Anspruch 1 oder 2, **dadurch gekennzeichnet, dass** die Aufnahme (4) mit einer Vertiefung (10) zur Aufnahme des Bolzens (5) versehen ist und die Seitenwände der Vertiefung (10) schräg verlaufende Auflaufflächen aufweisen.

4. Rundfunkempfänger nach einem der vorstehenden Ansprüche, **dadurch gekennzeichnet, dass** der Bolzen (5) federnd gelagert ausgebildet ist.

5. Rundfunkempfänger nach einem der vorstehenden Ansprüche, **dadurch gekennzeichnet, dass** das Bedienteil (3) länglich ausgebildet ist, dass das Bedienteil (3) an jedem Längsende je einen zueinander fluchtenden Bolzen (5) aufweist, welcher federnd ausgebildet ist und jeweils in ihm zugeordnete Aufnahmen (4) in der Ausnehmung (2) des Hauptteils (1) eingreifbar ausgebildet ist.

## Claims

1. Broadcast receiver with a main part (1) and a control part (3) which can be introduced into an aperture (2) in -the main part (1) and is mounted in the main part (1) so as to be pivotable about an axis of rotation, wherein the rotatable mounting is formed by a bolt (5) which fixes the axis of rotation and a receptacle (4) co-ordinated therewith in the main part (1) or in the control part (3), the receptacle (4) and the bolt (5) exert a spring force on each other and the receptacle (4) and the bolt (5) are constructed so that they can be separated against the spring force, **characterised in that** the receptacle (4) has guide elements (9) which lead the bolt (5) into the rotary mounting position as the control part (3) is introduced into the main part (1).

2. Broadcast receiver as claimed in Claim 1, **characterised in that** the receptacle (4) is in the shape of a truncated cone with a recess (10) to receive the bolt (5) in the top surface of the truncated cone.

3. Broadcast receiver as claimed in either Claim 1 or Claim 2, **characterised in that** the receptacle (4) is provided with a recess (10) to receive the bolt (5) and the side walls of the recess (10) have obliquely extending lead-in surfaces.

4. Broadcast receiver as claimed in any one of the preceding claims, **characterised in that** the bolt (5) is constructed so that it is mounted resiliently.

5. Broadcast receiver as claimed in any one of the preceding claims, **characterised in that** the control part (3) is of elongate construction, and that the control part (3) a bolt (5) on each longitudinal end, the said bolts being aligned with one another, of resilient construction and in each case constructed so as to engage in associated receptacles (4) in the aperture (2) of the main part (1).

## Revendications

1. Récepteur de radiodiffusion comportant un élément principal (1) et un élément de commande (3) qui peut être introduit dans un creux (2) pratiqué dans l'élément principal (1), qui est logé dans l'élément principal (1) et peut être rabattu autour d'un axe de rotation, sachant que le logement rotatif est formé par une cheville (5) déterminant l'axe de rotation et par un élément de réception (4) conjugué à celle-ci dans l'élément principal (1) ou dans l'élément de commande (3), et l'élément de réception (4) et la cheville (5) s'emboîtent réciproquement avec une force élastique et l'élément de réception (4) et la cheville (5) sont formés de manière séparable contre la force élastique, **caractérisé en ce que** l'élément de réception (4) comporte des éléments de guidage (9), lesquels dirigent la cheville (5) dans la position du coussinet de pivotement lors de l'introduction de l'élément de commande (3) dans l'élément principal (1).

2. Récepteur de radiodiffusion selon la revendication 1, **caractérisé en ce que** l'élément de réception (4) est tronconique avec une cavité (10) pour recevoir la cheville (5) dans la surface de recouvrement du cône tronqué.

3. Récepteur de radiodiffusion selon la revendication 1 ou 2, **caractérisé en ce que** l'élément de réception (4) est pourvu d'une cavité (10) pour recevoir la cheville (5) et les parois latérales de la cavité (10) comprennent des surfaces de glissement en biais.

4. Récepteur de radiodiffusion selon l'une des revendications précédentes, **caractérisé en ce que** la cheville (5) est montée sur ressort.

5. Récepteur de radiodiffusion selon l'une des revendications précédentes, **caractérisé en ce que** l'élément de commande (3) a une forme oblongue, que l'élément de commande (3) comporte à chaque extrémité longitudinale une cheville (5) affleurant l'une avec l'autre, laquelle est élastique pouvant s'engager à chaque fois dans les éléments de réception (4) conjugués logés dans le creux (2) de l'élément principal (1).
